# EUROPEAN PATENT APPLICATION

(11) **EP 4 553 559 A1**
(43) Date of publication of application: **14.05.2025**
(21) Application number: 23835352.8
(22) Date of filing: 26.06.2023
(51) Int. Cl.: G02B 21/00, G01N 21/05, G01N 21/64, G02B 21/06, G02B 21/26, G02B 21/34

(54) **FLUORESCENCE MICROSCOPE**

(30) Priority: 06.07.2022 JP 2022109240
(71) Applicant: National University Corporation Hokkaido University, Hokkaido 060-0808 (JP)
(72) Inventor: SONOSHITA, Masahiro, Sapporo-shi, Hokkaido 060-0808 (JP); HIRAMATSU, Koutaro, Tokyo 113-0033 (JP); MCCANN, Phillip Charles, Tokyo 113-0033 (JP); PETERSON, Jorgen Walker, Tokyo 113-0033 (JP); KANNO, Hiroshi, Tokyo 113-0033 (JP); HUANG, Kangrui, Tokyo 113-0033 (JP); KACENAUSKAITE, Laura, Tokyo 113-0033 (JP); GODA, Keisuke, Tokyo 113-0033 (JP)
(74) Representative: Meissner Bolte Partnerschaft mbB
(86) International application number: PCT/JP2023/023496
(87) International publication number: WO 2024/009818

(57) **Abstract**

Provided is a fluorescence microscope in which an irradiation optical system, a light focusing optical system, and a sample conveyance unit hardly interfere with each other and a degree of freedom in design is high. A fluorescence microscope (1) includes: an irradiation optical system (10) that irradiates a sample (S) with an excitation light beam to cut the sample; a light focusing optical system (20) having an optical axis perpendicular to an optical axis of the irradiation optical system (10); and a sample conveyance unit that conveys the sample (S) in a direction intersecting with a plane formed by the optical axis of the irradiation optical system (10) and the optical axis of the light focusing optical system (20). An angle (θ_{S}) between a sample (S) section by the excitation light beam and an axis (A_{F1}) of a conveyance route (capillary C) is greater than 0° and smaller than 180°.

## Description

### Technical Field

The present invention relates to a fluorescence microscope that generates a tomographic fluorescence image.

### Background Art

Non-patent Literature 1 discloses a light sheet fluorescence microscope (LSFM) in which flow cytometry is applied as a technique for translationally moving a sample (see (b) and (e) of Fig. 1 of Non-patent Literature 1).

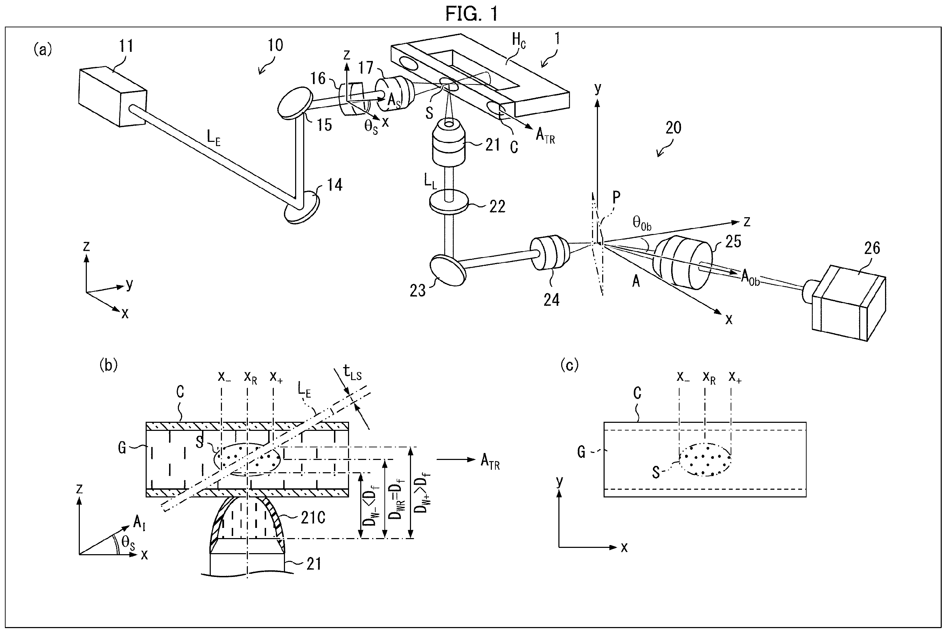

The LSFM includes a cubic sample chamber as illustrated in (e) of Fig. 1. A sample conveyance tube (indicated as FEP in (e) of Fig. 1) is provided so as to pass through a diagonal line when the sample chamber is viewed from above and to pass through a center of gravity of the sample chamber. A light sheet which is an excitation light beam in the LSFM is configured to orthogonally enter one of four side surfaces that constitute the sample chamber. Therefore, an angle formed by an optical axis of the excitation light beam and a central axis of the sample conveyance tube is 45°. Furthermore, the LSFM employs a configuration in which fluorescence emitted from the sample is focused via, among the four side surfaces that constitute the sample chamber, a side surface adjacent to a side surface through which the excitation light beam enters the sample chamber (see F-Mode in (b) of Fig. 1).

By configuring the LSFM as described above, the sample is irradiated with a sheet-like excitation light beam at an image formation position (i.e., the center of gravity of the sample chamber in Non-patent Literature 1) of the light sheet, and it is possible to acquire a two-dimensional fluorescence image in a region irradiated with the excitation light beam. That is, this LSFM is a fluorescence microscope that generates a tomographic fluorescence image of a sample.

Furthermore, the LSFM applies flow cytometry to translationally move a sample in an axial direction of the sample conveyance tube, and thus can generate tomographic fluorescence images in different layers of the sample. By synthesizing the plurality of tomographic fluorescence images thus obtained, a three-dimensional fluorescent model of the sample can be obtained (see (a) through (c) of Fig. 2 of Non-patent Literature 1).

### Citation List

### [Non-patent Literature]

[Non-patent Literature 1]
E. J. Gualda, et. al., BIOMEDICAL OPTICS EXPRESS, Vol. 6, No. 11, p. 4447, Nov. 2015

### Summary of Invention

### Technical Problem

In the LSFM disclosed in Non-patent Literature 1, the sample conveyance tube is positioned, in the vicinity of the sample, in a plane formed by an optical axis of an optical system (hereinafter, referred to as an irradiation optical system) that irradiates a sample with an excitation light beam and an optical axis of an optical system (hereinafter, referred to as a light focusing optical system) that focuses fluorescence (see (b) of Fig. 1). Therefore, it is demanded to select and spatially arrange an objective lens of the irradiation optical system and an objective lens of the light focusing optical system so that the objective lens of the irradiation optical system, the objective lens of the light focusing optical system, and the sample conveyance tube do not interfere with each other. In other words, the degree of freedom in designing the irradiation optical system and the light focusing optical system is low.

An aspect of the present invention is accomplished in view of the above problems, and an object thereof is to provide a fluorescence microscope in which an irradiation optical system, a light focusing optical system, and a sample conveyance unit typified by a sample conveyance tube hardly interfere with each other and which has a higher degree of freedom in design, as compared with the fluorescence microscope disclosed in Non-patent Literature 1.

### Solution to Problem

In order to attain the object, a fluorescence microscope in accordance with a first aspect of the present invention includes: an irradiation optical system that includes a conversion unit for converting a spot shape of an excitation light beam from a point shape to a linear shape or a scanning unit for linearly moving the excitation light beam whose spot shape is a point shape, the irradiation optical system irradiating a sample, so as to cut the sample, with the excitation light beam whose spot shape is a linear shape or the excitation light beam which is linearly moved; a light focusing optical system that includes a first objective lens for focusing fluorescence which is emitted from an irradiation position irradiated with the excitation light beam, an optical axis of the light focusing optical system being perpendicular to an optical axis of the irradiation optical system; and a sample conveyance unit that conveys the sample in a direction which intersects with a plane formed by the optical axis of the irradiation optical system and the optical axis of the light focusing optical system, a conveyance route for the sample in the sample conveyance unit passing through the irradiation position. The fluorescence microscope in accordance with the first aspect employs a configuration in which an angle formed by a section of the sample obtained by the excitation light beam and an axis of the conveyance route is greater than 0° and smaller than 180°.

### Advantageous Effects of Invention

According to an aspect of the present invention, it is possible to provide a fluorescence microscope in which an objective lens of an irradiation optical system, an objective lens of a light focusing optical system, and a sample conveyance unit typified by a sample conveyance tube hardly interfere with each other, as compared with the fluorescence microscope disclosed in Non-patent Literature 1.

### Brief Description of Drawings

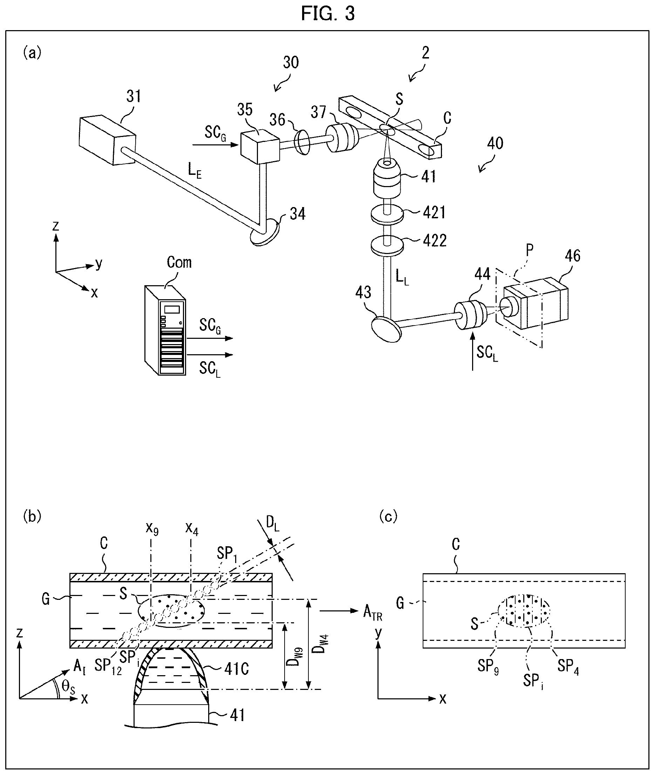

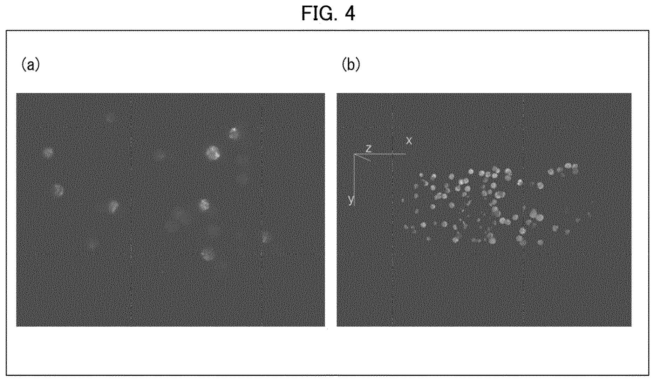

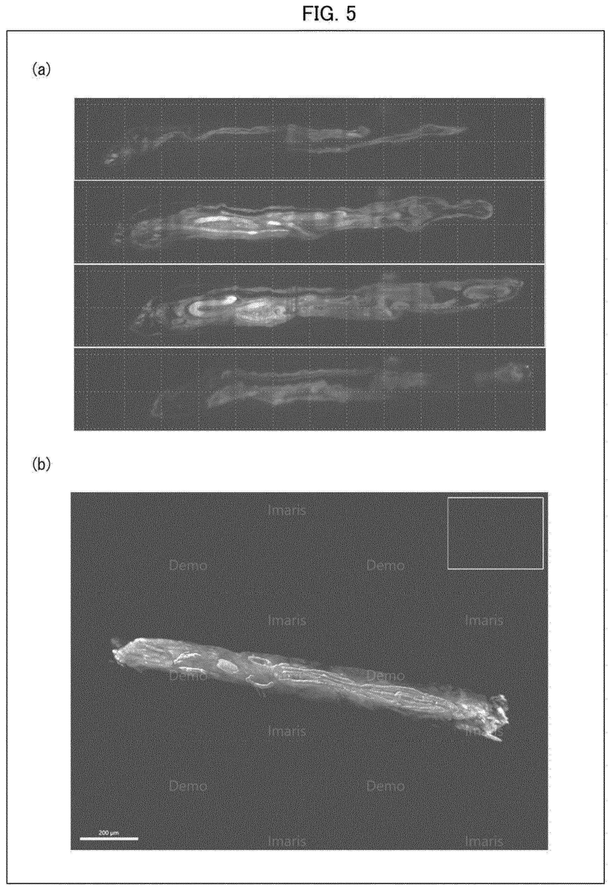

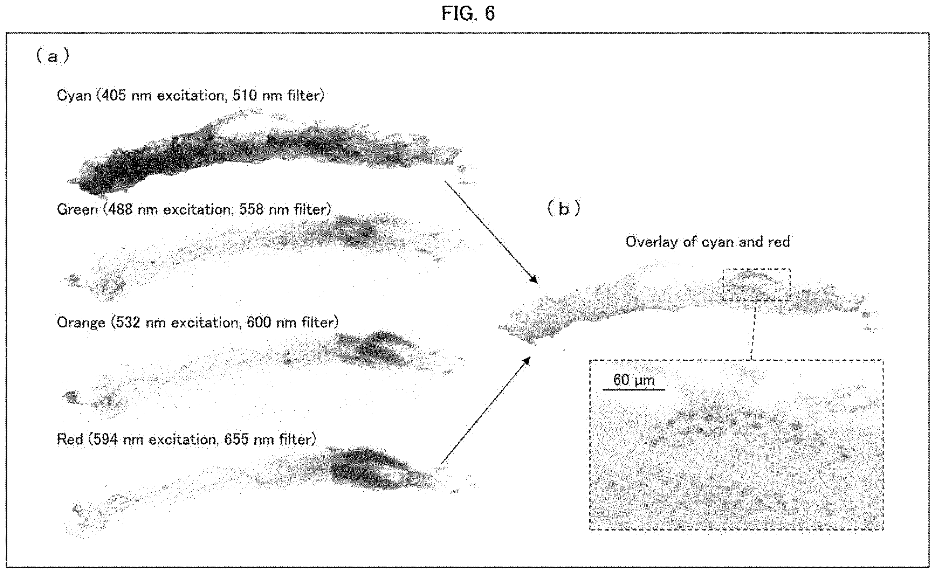

(a) of Fig. 1 is a schematic view illustrating a fluorescence microscope in accordance with Embodiment 1 of the present invention. (b) of Fig. 1 is a cross-sectional view illustrating a capillary and a sample at an irradiation position of an irradiation optical system included in the fluorescence microscope illustrated in (a) of Fig. 1. (c) of Fig. 1 illustrates an example of a tomographic fluorescence image of the sample illustrated in (b) of Fig. 1.

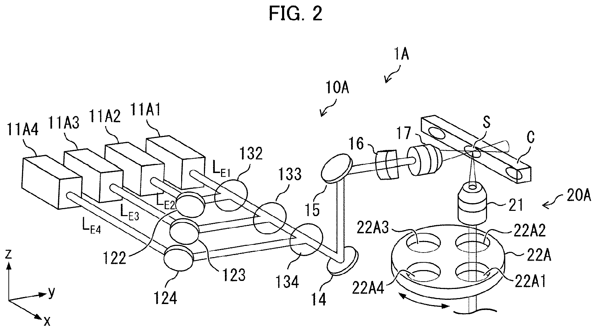

Fig. 2 is a schematic view illustrating a variation of the fluorescence microscope illustrated in (a) of Fig. 1.
(a) of Fig. 3 is a schematic view illustrating a fluorescence microscope in accordance with Embodiment 2 of the present invention. (b) of Fig. 3 is a cross-sectional view illustrating a capillary and a sample at an irradiation position of an irradiation optical system included in the fluorescence microscope illustrated in (a) of Fig. 3. (c) of Fig. 3 illustrates an example of a tomographic fluorescence image of the sample illustrated in (b) of Fig. 3.
(a) of Fig. 4 illustrates an example of a tomographic fluorescence image of fluorescence beads obtained in Example 1 of the present invention. (b) of Fig. 4 illustrates a three-dimensional fluorescent model synthesized from a plurality of tomographic fluorescence images of fluorescence beads obtained in Example 1 of the present invention.
(a) of Fig. 5 illustrates four tomographic fluorescence images of a Drosophila larva obtained in Example 2 of the present invention. (b) of Fig. 5 illustrates organs colored with false colors in a three-dimensional image synthesized from 1060 tomographic fluorescence images of the Drosophila larva obtained in Example 2 of the present invention.
(a) of Fig. 6 illustrates four tomographic fluorescence images of a Drosophila larva obtained in Example 3 of the present invention. (b) of Fig. 6 is an image obtained by superimposing tomographic fluorescence images of the Drosophila larva obtained in Example 3 of the present invention.
Fig. 7 is tomographic fluorescence images of eight Drosophila larvae obtained in Example 4 of the present invention.
Fig. 8 shows images obtained by coloring, with false colors, the tomographic fluorescence images illustrated in Fig. 7.

### Description of Embodiments

### [Embodiment 1]

### <Overview>

As illustrated in Fig. 1, a fluorescence microscope 1 in accordance with Embodiment 1 of the present invention irradiates a sample S with an excitation light beam so as to cut the sample S. The fluorescence microscope 1 uses a digital camera 26 to capture an image (hereinafter referred to as a tomographic fluorescence image) of fluorescence which is generated from a section (in other words, a layer) of the sample S. As a result, the fluorescence microscope 1 generates image data indicating the tomographic fluorescence image. An image pickup device included in the digital camera 26 can be selected as appropriate. Examples of the image pickup device include a complementary metal oxide semiconductor (CMOS), a charge coupled device (CCD), an avalanche photodiode (APD) array, and a photomultiplier tube (PMT) array.

Furthermore, the fluorescence microscope 1 uses a sample conveyance unit to translationally move the sample S, and thus can generate tomographic fluorescence images of different layers of the sample. The fluorescence microscope 1 uses a processor of a computer to combine the plurality of tomographic fluorescence images thus obtained, and thus can generate a three-dimensional fluorescent model of the sample.

In the present embodiment, a Drosophila larva is used as an example of the sample S, and the fluorescence microscope 1 will be described. That is, a subject to be observed by the fluorescence microscope 1 in this example is a Drosophila larva. A typical body length of a Drosophila larva is 1.2 mm. Note, however, that the subject to be observed is not limited to a Drosophila. Examples of the other subjects to be observed include a killifish, an organoid, a nematode, a zooplankton, a phytoplankton, a plant callus, and a mammalian embryo. Examples of the organoid which serves as a subject to be observed include a cardiomyocyte. A shape of the cardiomyocyte is not limited and can be, for example, a sheet form. Other examples include organoids derived from a skin or a bowel, and the like. A shape of the organoid is not limited and can be, for example, a spherical form. Thus, the fluorescence microscope 1 can be suitably used in the fields of regenerative medical technique, tumor biology, drug development, and the like. Examples of the mammal which serves as a subject to be observed include a mouse, a rat, and the like. It is possible to quickly obtain a three-dimensional model of a sample S by using the fluorescence microscope 1. Therefore, the fluorescence microscope 1 can be suitably used with respect to a sample S having a relatively long length in the long-axis direction. A preferable length of a sample S as a subject to be observed in the long-axis direction is 0.1 mm or more and 10 mm or less. Note, however, that the preferable length of the sample S in the long-axis direction is not limited to this and may be, for example, approximately 20 mm.

### <Configuration>

The following description will discuss a configuration of the fluorescence microscope 1, with reference to Fig. 1. (a) of Fig. 1 is a schematic view illustrating the fluorescence microscope 1. (b) of Fig. 1 is a cross-sectional view illustrating a capillary C and a sample S at an irradiation position of an irradiation optical system 10 included in the fluorescence microscope 1. (c) of Fig. 1 illustrates an example of a tomographic fluorescence image of the sample S.

As illustrated in Fig. 1, the fluorescence microscope 1 includes an irradiation optical system 10, a light focusing optical system 20, a capillary C, and a capillary holder H_{C}. Although not illustrated in Fig. 1, the fluorescence microscope 1 includes an optical stage, a fluid control unit, and a computer.

In the present embodiment, the fluorescence microscope 1 is placed on a surface of an optical surface plate (not illustrated in Fig. 1). In an orthogonal coordinate system illustrated in Fig. 1, the surface of the optical surface plate is defined as an x-y plane, and a normal direction in a vertically upward direction out of a normal direction to the surface of the optical surface plate is defined as a positive z-axis direction. In the present embodiment, the capillary C is fixed using the capillary holder H_{C} and the optical stage so that an axial direction of the capillary C including the sample S is parallel to the surface of the optical surface plate. In the orthogonal coordinate system illustrated in Fig. 1, a conveyance direction of the sample S (the arrow A_{TR} direction illustrated in Fig. 1) is defined as a positive x-axis direction, and a positive y-axis direction is defined so as to constitute the right-handed orthogonal coordinate system together with the positive x-axis direction and the positive z-axis direction.

### (Sample conveyance unit)

The fluorescence microscope 1 employs, as a sample conveyance unit for conveying the sample S in translational movement, a configuration in which a fluid control unit connected to the capillary C and a mechanical optical stage are used in combination. The fluid control unit will be described later. As the fluid control unit, it is possible to apply a mechanism used in flow cytometry. In the fluorescence microscope 1, the fluid control unit is used for rough conveyance of the sample S, and the optical stage is used for precise conveyance of the sample S. Examples of the rough conveyance include translationally moving the sample S whose tomographic fluorescence image is to be captured to the vicinity of an irradiation position irradiated with an excitation light beam L_{E}. Examples of the precise conveyance include translationally moving the sample S slowly in order to capture a plurality of tomographic fluorescence images.

In the fluorescence microscope 1, any of the fluid control unit and the optical stage can be omitted from the sample conveyance unit. Both the fluid control unit and the optical stage are existing techniques. Therefore, in the present embodiment, the fluid control unit and the optical stage will be merely briefly described.

The capillary C is an example of a tube that constitutes a conveyance route for a sample S. The capillary C is configured so as to be filled with a gel G or fluid in which samples S are dispersed. In the present embodiment, a gel G is used as a medium in which samples S are dispersed. The gel G which is a medium is configured not to have fluidity at room temperature but is configured to express fluidity by being heated to a predetermined temperature. Therefore, the gel G can fix the sample S at room temperature, and allows rough conveyance by being heated. Note that the medium can be a fluid. Examples of the fluid include water, glycerol, ethyl cinnamate, and the like. In a case where a fluid is employed as the medium, a fluid (such as a sol) having viscosity higher than that of a normal liquid is preferable. The conveyance route for the sample S can be obtained by applying a microchannel that is used in flow cytometry. (a) of Fig. 1 illustrates, in the capillary C, only a section in the vicinity of an irradiation position irradiated with the excitation light beam L_{E}. Note, however, that the capillary C extends, in the x-axis direction, over the front and the back of the section in the vicinity of the irradiation position irradiated with the excitation light beam L_{E}.

In the present embodiment, the section of the capillary C in the vicinity of the irradiation position irradiated with the excitation light beam L_{E} is constituted by quartz glass. This section is formed in a straight line shape. In the capillary C, sections other than the vicinity of the irradiation position irradiated with the excitation light beam L_{E} are constituted by resin. Note, however, that the configuration of the capillary C is not limited to such a configuration. The capillary C only needs to be configured such that at least the section in the vicinity of the irradiation position irradiated with the excitation light beam L_{E} is constituted by a material that allows the excitation light beam L_{E} and fluorescence L_{L} to pass therethrough.

In the present embodiment, a shape of a cross section (hereinafter referred to as a transverse cross section) perpendicular to the axis of the capillary C is a square with one side of 2 mm. Note, however, that the shape of the transverse cross section of the capillary C is not limited to a square and can be set as appropriate.

The fluid control unit is connected to one end of the capillary C. In the present embodiment, a microsyringe containing therein a gel G in which samples S are dispersed and a stepping motor that can precisely control a position of a piston of the microsyringe are used as an example of the fluid control unit. In the present embodiment, the stepping motor is controlled by a computer. The microsyringe and the stepping motor configured in this manner can control a flow of the gel G inside the capillary C. Note, however, that the fluid control unit is not limited to the microsyringe and the stepping motor configured in this manner, and an existing flow cytometry technique can be used as appropriate. Other examples of the fluid control unit include a configuration in which a compression unit or a decompression unit is combined with a valve. Hereinafter, the compression unit and the decompression unit are collectively referred to as a pressure control unit. The pressure control unit is configured to control pressure applied to the gel G so that the gel G flows in a predetermined direction inside the capillary C. The pressure applied to the gel G may be positive pressure or negative pressure. In a case where positive pressure is applied, the pressure control unit may be provided on the upstream side of the capillary C. In a case where negative pressure is applied, the pressure control unit may be provided on the downstream side of the capillary C. Examples of the pressure control unit include a pump, a microsyringe, and the like. The valve switches between on and off states of a liquid flow by opening and closing thereof. The pressure control unit is configured to control a flow velocity of the gel G inside the capillary C by adjusting the pressure applied to the gel G. According to the fluid control unit, the valve switches between on and off states of the flow of the liquid while the pressure control unit adjusts the pressure applied to the gel G. Thus, it is possible to control a position of the sample S inside the capillary C. It is preferable that the fluid control unit including the pressure control unit and the valve is used in combination with the optical stage that carries out precise conveyance of the sample S. Even in a case where the fluid control unit including the pressure control unit and the valve is used, the above-described liquid can be used as a fluid instead of the gel G.

In a case of capturing a tomographic fluorescence image of the sample S, an inner space of the capillary C is filled with a gel G which has been extruded from a microsyringe and in which samples S are dispersed. In the present embodiment, a Drosophila having a body length of approximately 1.2 mm is used as the sample S, and agar is used as the gel G. In Fig. 1, the Drosophila is simply illustrated by an ellipse in order to simplify the drawing.

As illustrated in (a) of Fig. 1, in the fluorescence microscope 1, the capillary C is fixed by the capillary holder H_{C}. Furthermore, the capillary holder H_{C} is fixed to the optical stage. In the present embodiment, an xyz stage in which the stage can be moved in all directions of three axes is employed as the optical stage. Here, the movement of the optical stage is controlled by a computer. The optical stage causes the capillary C to translationally move in the axial direction of the capillary C (in the x-axis direction of the coordinate system illustrated in Fig. 1). In (a) and (b) of Fig. 1, the arrow A_{TR} indicates a direction in which the capillary C is translationally moved. The arrow A_{TR} is parallel to the x-axis direction.

### (Irradiation optical system)

As illustrated in (a) of Fig. 1, the irradiation optical system 10 includes an excitation light source 11, a mirror 14, a mirror 15, a cylindrical lens 16, and an objective lens 17.

The excitation light source 11 is a light source that generates an excitation light beam L_{E} which excites the sample S. In the present embodiment, a semiconductor laser having a wavelength of 488 nm is used as the excitation light source 11. The output of the excitation light source 11 is not particularly limited and can be set as appropriate. The excitation light source 11 is fixed on the surface of the optical surface plate so as to emit the excitation light beam L_{E} in the positive x-axis direction. Although not illustrated in (a) of Fig. 1, an optical element (e.g., a collimating lens, a cylindrical lens, or the like) for aligning a beam profile of the excitation light beam L_{E} may be disposed on the optical path of the excitation light beam L_{E}.

The mirror 14 and the mirror 15 are each a total reflection mirror. The mirror 14 reflects, in the positive z-axis direction, the excitation light beam L_{E} which has been emitted from the excitation light source 11. The mirror 15 reflects, in the positive y-axis direction, the excitation light beam L_{E} which has been reflected by the mirror 14.

The cylindrical lens 16 which is an example of a conversion unit converts the beam profile of the excitation light beam L_{E} from a Gaussian beam to a line beam. The line beam is a generic term for beams with which a shape of a spot in a case of image formation is a linear shape, and is also called a light sheet. That is, the cylindrical lens 16 converts the spot shape of the excitation light beam L_{E} from a point shape to a linear shape.

The objective lens 17 forms an image at the irradiation position with the excitation light beam L_{E} which has passed through the cylindrical lens 16. In the irradiation optical system 10, the excitation light source 11, the mirror 14, the mirror 15, the cylindrical lens 16, and the objective lens 17 are set up so that the sample S is irradiated with the excitation light beam L_{E} in a state in which the sample S is cut with the excitation light beam L_{E} which is a line beam (see (b) of Fig. 1). In the present embodiment, a size of a spot of the excitation light beam L_{E} at the irradiation position is as follows. A thickness t_{LS} of the light sheet is 18 µm, and a width (length of linear part) of the light sheet is 4 mm. Note, however, that the thickness t_{LS} and the width of the light sheet are not limited to those, and can be set as appropriate in accordance with a size of a sample, an angle θ_{S} (described later), and the like.

As described above, the irradiation optical system 10 including the cylindrical lens 16 is an irradiation optical system that irradiates the sample S with the excitation light beam L_{E} whose spot shape is a linear shape so as to cut the sample S. In the irradiation optical system 10, the objective lens 17 can be omitted.

(b) of Fig. 1 illustrates a state in which the sample S is disposed at the irradiation position irradiated with the excitation light beam L_{E} which is a line beam. In (b) of Fig. 1, the arrow A₁ indicates a direction of a section of the sample S which is cut by the excitation light beam L_{E}. The direction of the section (hereinafter, also referred to as an arrow A₁ direction) can be adjusted using a rotation angle which is in a case where the cylindrical lens 16 is disposed and which is a rotation angle about the y-axis. In the fluorescence microscope 1, an angle θ_{S} (i.e., an angle formed by the section of the sample S obtained by the excitation light beam L_{E} and an axis of the conveyance route) formed by the arrow A_{I} direction and an arrow A_{TR} direction is set to be in a range that is greater than 0° and smaller than 180°. In the present embodiment, 30° is employed as an example of the angle θ_{S}. Note, however, that the angle θ_{S} is not limited to 30° and can be set as appropriate. For example, in a case where a Drosophila is used as the sample S, a preferable range of the angle θ_{S} is a range of 0° or more and 40° or less.

As illustrated in (b) of Fig. 1, a position which coincides with an optical axis of an objective lens 21 among positions on the x-axis corresponding to the section of the sample S is defined as a reference position X_{R}. Among the positions on the x-axis corresponding to the section of the sample S, a maximum position is defined as a maximum position X₊ and a minimum position is defined as a minimum position X₋. Later, a working distance from the objective lens 21 and a position at which an image is formed by the imaging lens 24 will be described using the reference position X_{R}, the maximum position X₊, and the minimum position X₋.

### (Light focusing optical system)

As illustrated in (a) of Fig. 1, the light focusing optical system 20 includes an objective lens 21, a long-pass filter 22, a mirror 23, an imaging lens 24, an objective lens 25, and a digital camera 26.

The objective lens 21 is an example of the first objective lens and focuses fluorescence L_{L} which is emitted from the section of the sample S that is positioned at an irradiation position irradiated with the excitation light beam L_{E}. Here, the objective lens 21 is disposed so that the optical axis of the objective lens 21 is perpendicular to the optical axis of the objective lens 17. In the state illustrated in Fig. 1, the optical axis of the objective lens 17 is parallel to the y-axis direction, and the optical axis of the objective lens 21 is parallel to the z-axis direction. Thus, in the vicinity of the irradiation position irradiated with the excitation light beam L_{E}, the optical axis of the irradiation optical system 10 and the optical axis of the light focusing optical system 20 are perpendicular to each other. A plane which is formed by the optical axis of the objective lens 17 in the irradiation optical system 10 and the optical axis of the objective lens 21 in the light focusing optical system 20 is parallel to a y-z plane.

As illustrated in (b) of Fig. 1, the objective lens 21 includes a cap 21C. The cap 21C is provided so as to cover, in a pair of incidence and exit planes of the objective lens 21, one of the incidence and exit planes on the side close to the capillary C. The cap 21C is a resin-made dome-shaped member, and an opening is provided at an apex part of the dome so as to allow fluorescence L_{L} to pass therethrough. In the fluorescence microscope 1, by filling the dome of the cap 21C configured as described above with water, the objective lens 21 is used as an immersion objective lens.

The long-pass filter 22 is a filter that blocks light having a wavelength shorter than a cutoff wavelength and allows light having a wavelength longer than the cutoff wavelength to pass therethrough, and is provided on an optical path of the fluorescence L_{L}. In the long-pass filter 22, the cutoff wavelength can be set as appropriate within a range of wavelength which is longer than a wavelength of an excitation light beam L_{E} generated by the excitation light source 11 and which is shorter than a wavelength of fluorescence L_{L} to be observed. It is also possible to use, in place of the long-pass filter 22, a band-pass filter that allows light in a wavelength band including the wavelength of fluorescence L_{L} to pass therethrough.

The mirror 23 is a total reflection mirror that reflects, in the positive y-axis direction, fluorescence L_{L} which has been focused by the objective lens 21 and propagates in the negative z-axis direction.

The imaging lens 24 is disposed downstream of the objective lens 21. The imaging lens 24 forms, on an image formation plane P, an image (see (c) of Fig. 1) of the fluorescence L_{L} emitted from the section of the sample S.

Here, a height of the cap 21C is set so that a working distance D_{WR} from the objective lens 21 to the section of the sample S at the reference position X_{R} conforms to a focal length D_{f} of the imaging lens 24. Therefore, in the section of the sample S, fluorescence L_{L} emitted from the reference position X_{R} forms an image at a position which conforms to the focal length of the imaging lens 24.

Meanwhile, a working distance D_{W+} from the objective lens 21 to the section of the sample S at the maximum position X₊ is longer than the focal length D_{f} due to the above-described angle θ_{S}. Therefore, the fluorescence L_{L} emitted from the maximum position X₊ in the section of the sample S forms an image at a position closer to the imaging lens 24 in comparison to the focal length of the imaging lens 24.

Similarly, a working distance D_{W-} from the objective lens 21 to the section of the sample S at the minimum position X₋ is shorter than the focal length D_{f} due to the above-described angle θ_{S}. Therefore, the fluorescence L_{L} emitted from the minimum position X₋ in the section of the sample S forms an image at a position farther from the imaging lens 24 in comparison to the focal length of the imaging lens 24.

Therefore, with respect to the image formation plane P (see (a) of Fig. 1) on which an image of the fluorescence L_{L} emitted from the section of the sample S is formed by the imaging lens 24, a normal line is inclined with respect to the optical axis of the imaging lens 24 in accordance with the angle θ_{S}.

The objective lens 25 is an example of the second objective lens and focuses a tomographic fluorescence image (i.e., an image of fluorescence L_{L} formed on the image formation plane P) on the image formation plane P. The objective lens 25 is disposed so that an optical axis of the objective lens 25 is inclined with respect to the optical axis of the imaging lens 24 so that an angle formed by the optical axis of the objective lens 25 and the normal line to the image formation plane P is smaller as compared with a case where the optical axis of the objective lens 25 coincides with the optical axis of the imaging lens 24 (i.e., in a case where the objective lens 25 and the imaging lens 24 are arranged on a straight line).

A tomographic fluorescence image (see (c) of Fig. 1) which is focused by the objective lens 25 enters a light receiving surface of the digital camera 26. The digital camera 26 converts the tomographic fluorescence image which has entered the light receiving surface into image information which is an electric signal indicating the tomographic fluorescence image, and supplies the image information to a computer. In this manner, a tomographic fluorescence image of the section of the sample S is obtained.

### (Relationship between optical axis of each optical system and conveyance route)

Next, a relationship between the optical axis of the objective lens 17 in the irradiation optical system 10, the optical axis of the objective lens 21 in the light focusing optical system 20, and the axis (arrow A_{TR} direction) of the capillary C corresponding to the conveyance route for the sample S will be described.

As described above, a plane formed by the optical axis of the objective lens 17 and the optical axis of the objective lens 21 is a plane which is parallel to the y-z plane. Furthermore, in the fluorescence microscope in accordance with one aspect of the present invention, the capillary C that corresponds to the conveyance route for the sample S is provided so as to pass through the irradiation position irradiated with the excitation light beam L_{E}. Here, it is only necessary that the conveyance route for the sample S is provided so as to intersect with at least the plane which is formed by the optical axis of the objective lens 17 and the optical axis of the objective lens 21. It is preferable that an angle at which the conveyance route for the sample S intersects with the plane formed by the optical axis of the objective lens 17 and the optical axis of the objective lens 21 is 75° or more and 90° or less. When considering a plane and a straight line which intersect with each other, angles formed by the plane and the straight line include an acute angle and an obtuse angle. A range of the preferable angle described above is an angle range which is defined for the acute angle among the acute angle and the obtuse angle. Therefore, an upper limit value of the range of the angle is 90°. By setting the angle to be 75° or more, it is possible to reduce spatial interference between the capillary C and the objective lens 17. In the present embodiment, for example, a configuration is employed in which the conveyance route for the sample S is perpendicular to the plane formed by the optical axis of the objective lens 17 and the optical axis of the objective lens 21 (see (a) of Fig. 1).

### <Variation of fluorescence microscope>

Next, with reference to Fig. 2, a fluorescence microscope 1A which is a variation of the fluorescence microscope 1 will be described. Fig. 2 is a schematic view illustrating the fluorescence microscope 1A. Fig. 2 illustrates only an irradiation optical system 10A of the fluorescence microscope 1 and a part of a light focusing optical system 20A.

The fluorescence microscope 1 illustrated in Fig. 1 is configured to acquire a tomographic fluorescence image using a monochromatic excitation light beam L_{E} (with a wavelength of 488 nm). Meanwhile, the fluorescence microscope 1A illustrated in Fig. 2 is configured to carry out multiple staining on a sample S and select one excitation light beam from a plurality of excitation light beams having different wavelengths (in this variation, four excitation light beams L_{E1} through L_{E4}) to obtain a tomographic fluorescence image.

As illustrated in Fig. 2, the fluorescence microscope 1A includes an irradiation optical system 10A, a light focusing optical system 20A, and a capillary C. In regard to this point, the fluorescence microscope 1A is similar to the fluorescence microscope 1. The irradiation optical system 10A and the light focusing optical system 20A of the fluorescence microscope 1A respectively correspond to the irradiation optical system 10 and the light focusing optical system 20 of the fluorescence microscope 1. Note that, in Fig. 2, a capillary holder H_{C} for fixing the capillary C is not illustrated.

The irradiation optical system 10A includes excitation light sources 11A1 through 11A4 that respectively generate a plurality of excitation light beams having different wavelengths (in this variation, four excitation light beams L_{E1} through L_{E4}). As with the excitation light source 11, all of the excitation light sources 11A1 through 11A4 are semiconductor lasers. The excitation light source 11A1 generates an excitation light beam L_{E1} which has a wavelength of 405 nm. The excitation light source 11A2 generates an excitation light beam L_{E2} which has a wavelength of 488 nm. The excitation light source 11A3 generates an excitation light beam L_{E3} which has a wavelength of 532 nm. The excitation light source 11A4 generates an excitation light beam L_{E4} which has a wavelength of 589 nm.

The irradiation optical system 10A includes mirrors 122 through 124 and half mirrors 132 through 134 for combining beam lines of the respective excitation light beams L_{E2} through L_{E4} with a beam line of the excitation light beam L_{E1}.

Each of the mirrors 122 through 124 is a total reflection mirror. The mirror 122 reflects, in the positive y-axis direction, the excitation light beam L_{E2} which has been emitted from the excitation light source 11A2. Similarly, the mirror 123 reflects, in the positive y-axis direction, the excitation light beam L_{E3} emitted from the excitation light source 11A3, and the mirror 124 reflects, in the positive y-axis direction, the excitation light beam L_{E4} emitted from the excitation light source 11A4.

Each of the half mirrors 132 through 134 is a half mirror that allows a half of light incident at an incident angle of 45° to pass therethrough and reflects the other half. The half mirror 132 allows the excitation light beam L_{E1} to pass therethrough and reflects the excitation light beam L_{E2} to combine the excitation light beam L_{E2} with the excitation light beam L_{E1}. Similarly, the half mirror 133 allows the excitation light beams L_{E1} and L_{E2} to pass therethrough and reflects the excitation light beam L_{E3} to combine the excitation light beam L_{E3} with the excitation light beams L_{E1} and L_{E2}. Similarly, the half mirror 134 allows the excitation light beams L_{E1}, L_{E2}, and L_{E3} to pass therethrough and reflects the excitation light beam L_{E4} to combine the excitation light beam L_{E4} with the excitation light beams L_{E1}, L_{E2}, and L_{E3}.

The light focusing optical system 20A includes four long-pass filters 22A1 through 22A4 that correspond to the long-pass filter 22 in the light focusing optical system 20. In each of the long-pass filters 22A1 through 22A4, a cutoff wavelength is configured to be longer than any of wavelengths of the excitation light beams L_{E1} through L_{E4}.

In the light focusing optical system 20A, four band-pass filters can be employed instead of the four long-pass filters 22A1 through 22A4. The number of long-pass filters or band-pass filters included in the light focusing optical system 20A may be different from the number of excitation light sources included in the irradiation optical system 10A.

### [Embodiment 2]

Next, a fluorescence microscope 2 in accordance with Embodiment 2 of the present invention will be described with reference to Fig. 3. (a) of Fig. 3 is a schematic view illustrating the fluorescence microscope 2. (b) of Fig. 3 is a cross-sectional view illustrating a capillary C and a sample S at an irradiation position of an irradiation optical system 30 included in the fluorescence microscope 2. (c) of Fig. 3 illustrates an example of a tomographic fluorescence image of the sample S.

The fluorescence microscope 1 illustrated in Fig. 1 is configured to convert a beam profile of an excitation light beam L_{E} at an irradiation position into a line beam, and then irradiate a sample S with the excitation light beam L_{E} which is the line beam. Meanwhile, in the fluorescence microscope 2 illustrated in Fig. 3, a shape of a spot of an excitation light beam L_{E} at an irradiation position is kept to be a point shape. With such a configuration, a galvanoscanner 35 is used to move the excitation light beam L_{E} so as to cut the sample S with use of the excitation light beam L_{E}.

As illustrated in Fig. 3, the fluorescence microscope 2 includes an irradiation optical system 30, a light focusing optical system 40, a capillary C, and a computer Com. In regard to this point, the fluorescence microscope 2 is similar to the fluorescence microscope 1. The irradiation optical system 30 and the light focusing optical system 40 of the fluorescence microscope 2 respectively correspond to the irradiation optical system 10 and the light focusing optical system 20 of the fluorescence microscope 1. Note that, in Fig. 3, a capillary holder H_{C} for fixing the capillary C is not illustrated.

An excitation light source 31, a mirror 34, and an objective lens 37 included in the irradiation optical system 30 respectively correspond to the excitation light source 11, the mirror 14, and the objective lens 17 included in the irradiation optical system 10. The convex lens 36 is provided at a position corresponding to the cylindrical lens 16 provided in the irradiation optical system 10. However, the convex lens 36 does not have a function to convert a beam profile of an excitation light beam L_{E} from a Gaussian beam to a line beam, and collimates the excitation light beam L_{E}.

Furthermore, the irradiation optical system 30 includes a galvanoscanner 35 in place of the mirror 15. The galvanoscanner 35 receives a control signal SC_{G} from a galvanoscanner control unit of the computer Com so that operation thereof is controlled by the control signal SC_{G}.

An objective lens 41, a long-pass filter 422, a mirror 43, and a digital camera 46 included in the light focusing optical system 40 respectively correspond to the objective lens 21, the long-pass filter 22, the mirror 23, and the digital camera 26 included in the light focusing optical system 20.

Furthermore, the light focusing optical system 40 includes an imaging lens 44 instead of the imaging lens 24. The imaging lens 44 includes a liquid crystal lens. In a liquid crystal lens, by changing an externally applied voltage, an orientation state of liquid crystal changes, and thus an apparent refractive index of the liquid crystal changes. Therefore, in the liquid crystal lens, it is possible to control a focal length thereof using an externally applied voltage. That is, the imaging lens 44 is an example of a varifocal lens in which a focal length can be varied using a control signal. The imaging lens 44 receives a control signal SC_{L} from a focal length control unit of the computer Com and the focal length thereof is controlled by the control signal SC_{L}.

In the light focusing optical system 40, a notch filter 421 is disposed between the objective lens 41 and the long-pass filter 422. The notch filter 421 is configured to remove a band including a wavelength of an excitation light beam L_{E} and allow a band including a wavelength of fluorescence L_{L} to pass therethrough. The notch filter 421 removes the excitation light beam L_{E}, so that it is possible to prevent stray light of the excitation light beam L_{E} from being mixed into an optical path of the fluorescence L_{L}. In the light focusing optical system 40, the notch filter 421 can be omitted.

### <Galvanoscanner and imaging lens>

An excitation light beam L_{E} which has been reflected by the mirror 34 and whose spot shape is a point shape enters the galvanoscanner 35. The galvanoscanner 35 is an example of the scanning unit that linearly moves a locus of a spot at an irradiation position irradiated with the excitation light beam L_{E} and thus cuts the sample S. The locus of the spot of the excitation light beam L_{E} which is moved by the galvanoscanner 35 is in a linear shape as with the shape of the spot at the irradiation position irradiated with the excitation light beam L_{E} illustrated in (b) of Fig. 1. That is, in the present embodiment, the irradiation optical system 30 including the galvanoscanner 35 irradiates the sample S with the excitation light beam L_{E} which is linearly moved so as to cut the sample S. In the irradiation optical system 30, the objective lens 37 can be omitted.

Here, an angle θ_{S} formed by a section of the sample S obtained by the excitation light beam L_{E} and an axis (an arrow A_{TR} direction) of the conveyance route is set in a range of greater than 0° and smaller than 180°, as with the case illustrated in (b) of Fig. 1.

In (b) of Fig. 3, the locus of the spot of the excitation beam L_{E} which is moved by the galvanoscanner 35 is set to be spots SP₁, ..., SPᵢ, ..., SP₁₂. Here, i is a positive integer of 1 or more and 12 or less.

Among the spots SP₁ through SP₁₂, spots SPᵢ cutting the sample S are six spots SP₄ through SP₉. As with the case of the fluorescence microscope 1 described above with reference to (b) of Fig. 1, in the fluorescence microscope 2, a working distance D_{Wi} (i is an integer of 4 or more and 9 or less) from the objective lens 41 is as follows. That is, a working distance D_{W4} is greatest, and a working distance D_{W9} is smallest. Therefore, in a case where a normal lens is used as the imaging lens 24 as in the light focusing optical system 20 of the fluorescence microscope 1 illustrated in (a) of Fig. 1, a normal line to an image formation plane P is inclined with respect to the optical axis of the imaging lens 24 in accordance with the angle θ_{S}.

In the present embodiment, the focal length of the imaging lens 44 is controlled by a control signal SC_{L}, and it is thus possible to decrease an angle formed by the normal line to the image formation plane P and the optical axis of the imaging lens 44 (i.e., the y-axis direction in (a) of Fig. 3). Alternatively, it is possible to cause the normal line to the image formation plane P to coincide with the optical axis of the imaging lens 44.

Specifically, as with the imaging lens 24, the imaging lens 44 is disposed downstream of the objective lens 41 and forms an image of fluorescence L_{L} emitted from the section of the sample S on the image formation plane P.

With such a configuration, the computer Com supplies a control signal SC_{L} for controlling the focal length of the imaging lens 44 to the imaging lens 44 so that the normal line to the image formation plane P is brought closer to the optical axis of the imaging lens 44 or coincides with the optical axis of the imaging lens 44. That is, a processor of the computer Com is an example of the focal length control unit. The computer Com controls the imaging lens 44 in synchronization with control of the galvanoscanner 35.

In the present embodiment, as illustrated in (a) of Fig. 3, the digital camera 46 is disposed downstream of the imaging lens 44 so that an optical axis of the digital camera 46 coincides with the optical axis of the imaging lens 44. A position of the digital camera 46 in the y-axis direction is set so that a position of a light receiving surface of the digital camera 46 coincides with the position of the image formation plane P. With this configuration, it is possible to easily acquire a tomographic fluorescence image as illustrated in (c) of Fig. 3. Note that regions of spots SP₄ through SP₉ illustrated in (c) of Fig. 3 respectively correspond to spots SP₄ through SP₉ which overlap with the sample S in (b) of Fig. 3. In the fluorescence microscope 2, the focal length of the imaging lens 44 is controlled in accordance with a working distance D_{Wi} of each spot SPᵢ. Therefore, it is possible to easily acquire clear tomographic fluorescence images in all the regions of the sample S. The fluorescence microscope 2 configured in this manner can be suitably used with respect to a sample S having a relatively long length in the long-axis direction, as with the fluorescence microscope 1. Examples of the length in the long-axis direction include approximately 20 mm.

### <Variation of irradiation optical system>

In the fluorescence microscope 2, the light focusing optical system 40 is employed as the light focusing optical system. Note, however, that, in a variation of the fluorescence microscope 2, the light focusing optical system 20 illustrated in (a) of Fig. 1 can be employed instead of the light focusing optical system 40.

### [Software implementation example]

The functions of the fluorescence microscopes 1 and 2 (hereinafter, referred to as the "device") can be realized by a program for causing a computer to function as the device, the program causing the computer to function as each control block (in particular, the galvanoscanner control unit and the focal length control unit) of the device.

In this case, the device includes, as hardware for executing the program, a computer which includes at least one control device (e.g., processor) and at least one storage device (e.g., memory). Each function described in the foregoing embodiments can be realized by executing the program by the control device and the storage device.

The program may be stored in one or more non-transitory storage mediums each of which can be read by the computer. This storage medium may or may not be provided in the above device. In the latter case, the program can be supplied to the device via any transmission medium such as a wired transmission medium or a wireless transmission medium.

Further, some or all of functions of respective control blocks can be realized by a logic circuit. For example, the present invention encompasses, in its scope, an integrated circuit in which a logic circuit that functions as each of the above-described control blocks is formed. As another alternative, for example, it is possible to realize the functions of respective control blocks by a quantum computer.

### [Additional remarks]

The present invention is not limited to the embodiments, but can be altered by a skilled person in the art within the scope of the claims. The present invention also encompasses, in its technical scope, any embodiment derived by combining technical means disclosed in differing embodiments.

A fluorescence microscope in accordance with a first aspect of the present invention includes: an irradiation optical system that includes a conversion unit for converting a spot shape of an excitation light beam from a point shape to a linear shape or a scanning unit for linearly moving the excitation light beam whose spot shape is a point shape, the irradiation optical system irradiating a sample, so as to cut the sample, with the excitation light beam whose spot shape is a linear shape or the excitation light beam which is linearly moved; a light focusing optical system that includes a first objective lens for focusing fluorescence which is emitted from an irradiation position irradiated with the excitation light beam, an optical axis of the light focusing optical system being perpendicular to an optical axis of the irradiation optical system; and a sample conveyance unit that conveys the sample in a direction which intersects with a plane formed by the optical axis of the irradiation optical system and the optical axis of the light focusing optical system, a conveyance route for the sample in the sample conveyance unit passing through the irradiation position. The fluorescence microscope in accordance with the first aspect employs a configuration in which an angle formed by a section of the sample obtained by the excitation light beam and an axis of the conveyance route is greater than 0° and smaller than 180°.

According to the above configuration, the sample conveyance unit conveys the sample in a direction which intersects with a plane formed by the optical axis of the irradiation optical system and the optical axis of the light focusing optical system. Therefore, the present fluorescence microscope can provide a fluorescence microscope in which an irradiation optical system, a light focusing optical system, and a sample conveyance unit typified by a sample conveyance tube hardly interfere with each other and which has a higher degree of freedom in design as compared with the fluorescence microscope disclosed in Non-patent Literature 1.

The fluorescence microscope in accordance with a second aspect of the present invention employs, in addition to the configuration of the fluorescence microscope in accordance with the foregoing first aspect, a configuration in which, at the irradiation position, the conveyance route is perpendicular to the plane which is formed by the optical axis of the irradiation optical system and the optical axis of the light focusing optical system.

According to the above configuration, it is possible to easily configure the light focusing optical system as compared with a case where the conveyance route is not perpendicular to a plane formed by the optical axis of the irradiation optical system and the optical axis of the light focusing optical system.

The fluorescence microscope in accordance with a third aspect of the present invention employs, in addition to the configuration of the fluorescence microscope in accordance with the foregoing first aspect or second aspect, a configuration in which the excitation light beam is a light sheet in which a shape of a spot at the irradiation position is a linear shape; and the irradiation optical system further includes a cylindrical lens for converting the shape of the spot into the linear shape.

According to the above configuration, a light sheet is used as an excitation light beam. Therefore, it is possible to acquire, as a two-dimensional image, an image of fluorescence emitted from a section of a sample by the excitation light beam. That is, it is possible to acquire a tomographic fluorescence image of the sample irradiated with the light sheet.

The fluorescence microscope in accordance with a fourth aspect of the present invention employs, in addition to the configuration of the fluorescence microscope in accordance with the foregoing first aspect or second aspect, a configuration in which a shape of a spot of the excitation light beam at the irradiation position is a point shape; and the irradiation optical system further includes a scanning mechanism that linearly moves a locus of the spot so as to cut the sample.

According to the above configuration, it is possible to acquire a tomographic fluorescence image of a sample, as with the fluorescence microscope in accordance with the third aspect.

In the fluorescence microscope in accordance with a fifth aspect of the present invention, in addition to the configuration of the fluorescence microscope in accordance with the foregoing third aspect or fourth aspect, the light focusing optical system further includes an imaging lens that is disposed downstream of the first objective lens and forms, on an image formation plane, an image of fluorescence emitted from the section, and a second objective lens that focuses a fluorescence image on the image formation plane. The fluorescence microscope in accordance with the fifth aspect employs a configuration in which: a normal line to the image formation plane is inclined with respect to an optical axis of the imaging lens in accordance with the angle formed by the section and the axis of the conveyance route; and the second objective lens is disposed to have an optical axis which is inclined with respect to the optical axis of the imaging lens so that an angle formed by the optical axis of the second objective lens and the normal line to the image formation plane is smaller as compared with a case where the optical axis of the second objective lens coincides with the optical axis of the imaging lens.

In the fluorescence microscope in accordance with an aspect of the present invention, an angle formed by a section of the sample obtained by the excitation light beam and an axis of the conveyance route is greater than 0° and smaller than 180°. Therefore, a normal line to the image formation plane obtained by using the imaging lens is inclined with respect to the optical axis of the imaging lens. According to the above configuration, it is possible to bring the second objective lens closer to a position facing the image formation plane, and it is thus possible to acquire a clearer tomographic fluorescence image.

The fluorescence microscope in accordance with a sixth aspect of the present invention employs, in addition to the configuration of the fluorescence microscope in accordance with the foregoing fourth aspect, a configuration in which the light focusing optical system further includes an imaging lens that is disposed downstream of the first objective lens and forms, on an image formation plane, an image of fluorescence emitted from the section, and a focal length control unit that controls a focal length of the imaging lens so that the normal line to the image formation plane is brought closer to the optical axis of the imaging lens or coincides with the optical axis of the imaging lens.

As in the above-described fourth aspect, in a case where the excitation light beam whose spot at the irradiation position has a point shape is employed and the locus of the spot is linearly moved, it is also possible to employ the sixth aspect in place of the foregoing fifth aspect. It is possible to simplify the configuration of the light focusing optical system by employing the sixth aspect in place of the fifth aspect.

In the fluorescence microscope in accordance with a seventh aspect of the present invention, in addition to the configuration of the fluorescence microscope in accordance with any one the foregoing first through sixth aspects, the irradiation optical system further includes a plurality of excitation light sources that respectively generate excitation light beams having different wavelengths. The fluorescence microscope in accordance with the seventh aspect employs a configuration in which the light focusing optical system further includes one or more long-pass filters each having a cutoff wavelength which is longer than any of the wavelengths of the excitation light beams respectively generated by the plurality of excitation light sources.

According to the above configuration, it is possible to select one excitation light beam from the plurality of excitation light beams having different wavelengths. Therefore, it is possible to use multiple staining in which a plurality of types of fluorochromes are used to separately stain respective target organs, as staining for obtaining a tomographic fluorescence image.

The fluorescence microscope in accordance with an eighth aspect of the present invention employs, in addition to the configuration of the fluorescence microscope in accordance with any one of the foregoing first through seventh aspects, a configuration in which the sample conveyance unit further includes a tube that constitutes the conveyance route and that is to be filled with a fluid in which samples are dispersed, and a fluid control unit that controls a flow of the fluid inside the tube in a state in which the tube is filled with the fluid.

According to the above configuration, it is possible to acquire a plurality of tomographic fluorescence images by applying a technique of so-called flow cytometry. Therefore, it is possible to increase a throughput in obtaining a three-dimensional fluorescent model of a sample.

The fluorescence microscope in accordance with a ninth aspect of the present invention employs, in addition to the configuration of the fluorescence microscope in accordance with any one of the foregoing first through eighth aspects, a configuration in which the sample conveyance unit further includes a tube that constitutes the conveyance route and that is to be filled with a gel in which samples are dispersed, and an optical stage for causing the tube to translationally move in an axial direction of the tube.

As the sample conveyance unit, the ninth aspect can be employed in place of the foregoing eighth aspect. In the ninth aspect, it is not necessary that the gel filling the tube has fluidity. Therefore, the sample can be firmly fixed. Therefore, it is possible to suppress positional fluctuation of fluorescence caused by movement of the sample, and it is thus possible to suppress blur which may occur in a tomographic fluorescence image. Note that the eighth aspect and the ninth aspect are not exclusive configurations and can be used in combination.

### Examples

### [Example 1]

The following description will discuss Example 1 of the present invention. In this example, a plurality of tomographic fluorescence images of fluorescence beads dispersed in agar were captured using the fluorescence microscope 1 illustrated in Fig. 1. Then, a three-dimensional fluorescent model of the fluorescence beads dispersed in agar was obtained by combining the obtained plurality of tomographic fluorescence images.

A diameter of a fluorescence bead used in this example was 30 µm or more and 40 µm or less. As the capillary C, a capillary C was used in which a shape of a transverse cross section of a conveyance route was a square. In the capillary C, a length of one side of the conveyance route was 500 µm. An optical stage was used to send the capillary C in the x-axis direction, and a sending velocity was 50 µm/sec. An exposure time was 5 msec/frame.

(a) of Fig. 4 illustrates an example of a tomographic fluorescence image of fluorescence beads obtained in this example. (b) of Fig. 4 illustrates a three-dimensional fluorescent model synthesized from a plurality of tomographic fluorescence images of fluorescence beads obtained in this example.

### [Example 2]

The following description will discuss Example 2 of the present invention. In this example, a plurality of tomographic fluorescence images of Drosophila larvae dispersed in agar were captured using the fluorescence microscope 1 illustrated in Fig. 1. Then, a three-dimensional fluorescent model of the Drosophila larvae dispersed in agar was obtained by combining the obtained plurality of tomographic fluorescence images.

A body length of the Drosophila larva used in this example was approximately 1.2 mm. As the capillary C, a capillary C was used in which a shape of a transverse cross section of a conveyance route was a square. In the capillary C, a length of one side of the conveyance route was 500 µm. An optical stage was used to send the capillary C in the x-axis direction, and a sending velocity was 150 µm/sec. An exposure time was 100 msec/frame. As a result, it was possible to capture 1060 tomographic fluorescence images of the Drosophila larva in 106 seconds. A time taken to synthesize a three-dimensional fluorescent model from a plurality of tomographic fluorescence images is several seconds. Therefore, it was possible to obtain a three-dimensional fluorescent model of the Drosophila larva in approximately 2 minutes.

(a) of Fig. 5 illustrates four tomographic fluorescence images of the Drosophila larva obtained in this example. These four tomographic fluorescence images are representative images selected from the plurality of tomographic fluorescence images of the Drosophila obtained in the present embodiment. (b) of Fig. 5 illustrates organs colored with false colors in the three-dimensional image synthesized from the 1060 tomographic fluorescence images of the Drosophila larva obtained in this example. In the three-dimensional fluorescent model illustrated in (b) of Fig. 5, segmentation is carried out for each organ of the larva, and each segmented organ is colored with a fake color.

### [Example 3]

The following description will discuss Example 3 of the present invention. In this example, the fluorescence microscope 1A illustrated in Fig. 2 was used to capture tomographic fluorescence images of a Drosophila larva with respective four colors of excitation light beams.

As for a tomographic fluorescence image of cyan, an excitation light source that generates an excitation light beam having a wavelength of 405 nm (blue) was used, and a long-pass filter having a cutoff wavelength of 510 nm was used. That is, in the case of the tomographic fluorescence image of cyan, fluorescence having a wavelength longer than 510 nm was collected. As for a tomographic fluorescence image of green, an excitation light source that generates an excitation light beam having a wavelength of 488 nm (cyan) was used, and a long-pass filter having a cutoff wavelength of 558 nm was used. As for a tomographic fluorescence image of orange, an excitation light source that generates an excitation light beam having a wavelength of 532 nm (green) was used, and a long-pass filter having a cutoff wavelength of 600 nm was used. As for a tomographic fluorescence image of red, an excitation light source that generates an excitation light beam having a wavelength of 594 nm (orange) was used, and a long-pass filter having a cutoff wavelength of 655 nm was used.

The Drosophila larva used in this example has a fluorescent protein "mCherry" in the salivary gland and wing anlage. mCherry is detected in orange and red channels, and is strongly extracted especially in the red channel. The whole body of the Drosophila larva used in this example is stained with "DAPI" which generates strong cyan fluorescence.

(a) of Fig. 6 illustrates four tomographic fluorescence images of the Drosophila larva obtained in this example. (b) of Fig. 6 is obtained by superimposing a cyan tomographic fluorescence image and a red tomographic fluorescence image of the Drosophila larva obtained in this example. As illustrated in (a) of Fig. 6, in the red tomographic fluorescence image, it is possible to clearly observe a fine feature (i.e., a state in which single cells are gathered) of the salivary gland of the larva. In the cyan tomographic fluorescence image, a contour of the whole body of the larva can be captured.

Further, by superimposing the cyan tomographic fluorescence image and the red tomographic fluorescence image, it is possible to highlight a specific tissue in a context range of the entire larva. This principle can be extended to other channels in various combinations. For example, a green fluorescent protein can be used to capture a green tomographic fluorescence image, and the green tomographic fluorescence image can be superimposed with a tomographic fluorescence image of another color to highlight a specific tissue of the larva.

### [Example 4]

The following description will discuss Example 4 of the present invention. In this example, a tomographic fluorescence image of a Drosophila larva was captured using the fluorescence microscope 2 illustrated in Fig. 3. Note, however, that, in the fluorescence microscope 2 used in this example, the foregoing pump and valve were used as the fluid control unit. In this example, an optical stage and a stepping motor for driving the optical stage were used as a configuration for precisely conveying a Drosophila larva.

A flow of imaging a Drosophila larva in this example was as follows. First, a liquid in which a plurality of larvae were dispersed was supplied to the inside of the capillary C. A larva was conveyed inside the capillary C by adjusting pressure of the pump. At a time when the larva reached the irradiation position or the vicinity of the irradiation position irradiated with an excitation light beam L_{E}, the valve was closed to stop the conveyance of the larva.

Next, a tomographic fluorescence image was captured while precisely conveying the Drosophila larva by moving the optical stage. A moving velocity of the stage was 0.2 mm/s, and a camera frame rate was 20 frame/sec. In this example, the Drosophila larva was imaged using excitation light beams L_{E} having four different colors, and it was thus possible to capture, within one minute, tomographic fluorescence images of four colors corresponding to the respective excitation light beams L_{E}. At a scanning speed of 0.2 mm/s, an imaging time for one color was within 15 seconds (within 300 frames). Here, a color switching time was negligible, and therefore the imaging time was approximately 1 minute in total. Note that the imaging time does not include a time for supplying the sample.

After the imaging was completed, the valve was opened to resume the conveyance of the larvae. The imaged larva was conveyed from the irradiation position irradiated with the excitation light beam L_{E}, and a larva to be imaged next was conveyed to the irradiation position. In this example, it was possible to obtain 100 or more images by the above method.

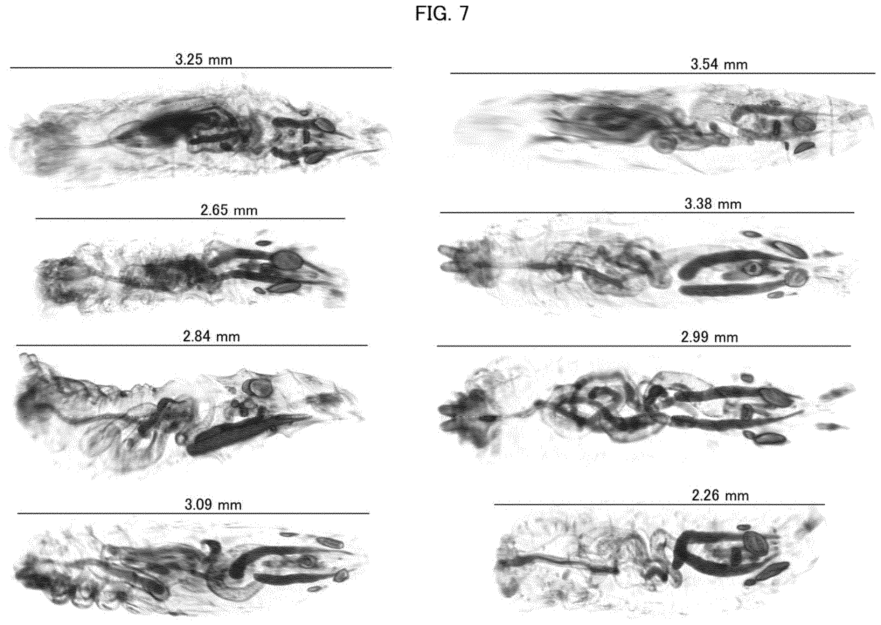

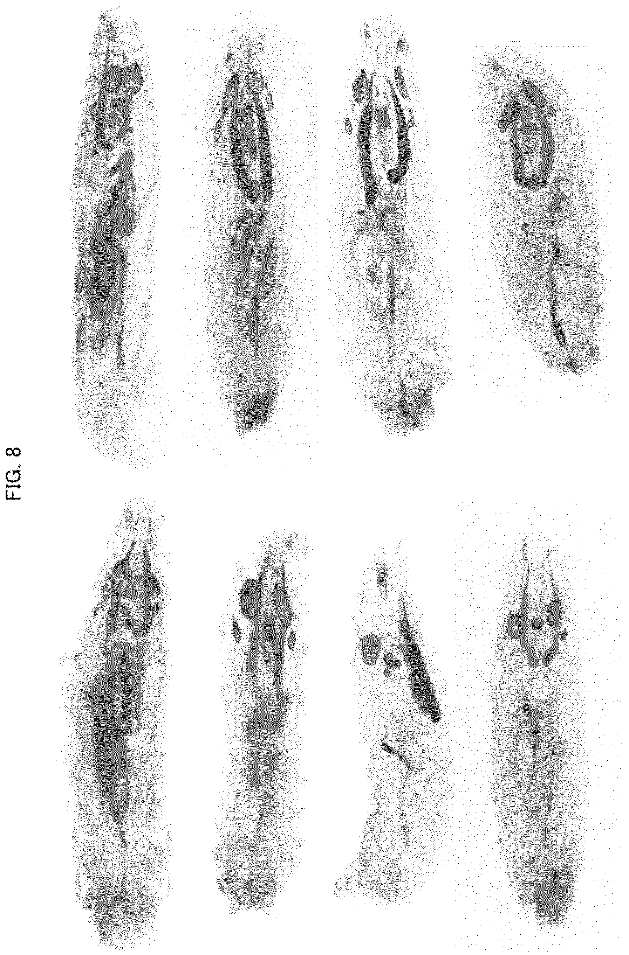

Fig. 7 is a cross sectional fluorescence image (gray scale image) of eight Drosophila larvae obtained in this example. Fig. 8 shows images obtained by coloring, with false colors, the cross sectional fluorescence images illustrated in Fig. 7. Fig. 7 also indicates a body length of each larva. An average body length of the Drosophila larvae used in this example was approximately 3 mm. In this example, it was possible to generate tomographic fluorescence images even for a sample having a size as large as 3 mm. The fluorescence microscope 2 can generate a fluorescence image even for a sample having a size larger than 3 mm. For example, the fluorescence microscope 2 can generate a fluorescence image even for a sample having a size of approximately 20 mm.

### Reference Signs List

1, 1A, 2: Fluorescence microscope
C: Capillary
S: Sample
H_{C}: Capillary holder
10, 10A, 30: Irradiation optical system
11, 11A1, 11A2, 11A3, 11A4, 31: Excitation light source
14, 15, 34, 122, 123, 124: Mirror
132, 133, 134: Half mirror
35: Galvanoscanner
16: Cylindrical lens
36: Convex lens
17, 37: Objective lens
20, 20A, 40: Light focusing optical system
21, 41: Objective lens (first objective lens)
21C: Cap
22, 22A1, 22A2, 22A3, 22A4, 422: Long-pass filter
23, 43: Mirror
24, 44: Imaging lens
P: Image formation plane
25: Objective lens (second objective lens)
26, 46: Digital camera

## Claims

1. A fluorescence microscope, comprising:
an irradiation optical system that includes a conversion unit for converting a spot shape of an excitation light beam from a point shape to a linear shape or a scanning unit for linearly moving the excitation light beam whose spot shape is a point shape, the irradiation optical system irradiating a sample, so as to cut the sample, with the excitation light beam whose spot shape is a linear shape or the excitation light beam which is linearly moved;
a light focusing optical system that includes a first objective lens for focusing fluorescence which is emitted from an irradiation position irradiated with the excitation light beam, an optical axis of the light focusing optical system being perpendicular to an optical axis of the irradiation optical system; and
a sample conveyance unit that conveys the sample in a direction which intersects with a plane formed by the optical axis of the irradiation optical system and the optical axis of the light focusing optical system, a conveyance route for the sample in the sample conveyance unit passing through the irradiation position,
an angle formed by a section of the sample obtained by the excitation light beam and an axis of the conveyance route being greater than 0° and smaller than 180°.

2. The fluorescence microscope as set forth in claim 1, wherein:
at the irradiation position, the conveyance route is perpendicular to the plane which is formed by the optical axis of the irradiation optical system and the optical axis of the light focusing optical system.

3. The fluorescence microscope as set forth in claim 1 or 2, wherein:
the excitation light beam is a light sheet in which a shape of a spot at the irradiation position is a linear shape; and
the irradiation optical system further includes a cylindrical lens for converting the shape of the spot into the linear shape.

4. The fluorescence microscope as set forth in claim 1 or 2, wherein:
a shape of a spot of the excitation light beam at the irradiation position is a point shape; and
the irradiation optical system further includes a scanning mechanism that linearly moves a locus of the spot so as to cut the sample.

5. The fluorescence microscope as set forth in claim 3, wherein:
the light focusing optical system further includes
an imaging lens that is disposed downstream of the first objective lens and forms, on an image formation plane, an image of fluorescence emitted from the section, and
a second objective lens that focuses a fluorescence image on the image formation plane;
a normal line to the image formation plane is inclined with respect to an optical axis of the imaging lens in accordance with the angle formed by the section and the axis of the conveyance route; and
the second objective lens is disposed to have an optical axis which is inclined with respect to the optical axis of the imaging lens so that an angle formed by the optical axis of the second objective lens and the normal line to the image formation plane is smaller as compared with a case where the optical axis of the second objective lens coincides with the optical axis of the imaging lens.

6. The fluorescence microscope as set forth in claim 4, wherein:
the light focusing optical system includes
an imaging lens that is disposed downstream of the first objective lens and forms, on an image formation plane, an image of fluorescence emitted from the section, and
a focal length control unit that controls a focal length of the imaging lens so that the normal line to the image formation plane is brought closer to the optical axis of the imaging lens or coincides with the optical axis of the imaging lens.

7. The fluorescence microscope as set forth in claim 1 or 2, wherein:
the irradiation optical system further includes a plurality of excitation light sources that respectively generate excitation light beams having different wavelengths; and
the light focusing optical system further includes one or more long-pass filters each having a cutoff wavelength which is longer than any of the wavelengths of the excitation light beams respectively generated by the plurality of excitation light sources.

8. The fluorescence microscope as set forth in claim 1 or 2, wherein:
the sample conveyance unit further includes
a tube that constitutes the conveyance route and that is to be filled with a fluid in which samples are dispersed, and
a fluid control unit that controls a flow of the fluid inside the tube in a state in which the tube is filled with the fluid.

9. The fluorescence microscope as set forth in claim 1 or 2, wherein:
the sample conveyance unit further includes
a tube that constitutes the conveyance route and that is to be filled with a gel in which samples are dispersed, and
an optical stage for causing the tube to translationally move in an axial direction of the tube.
